(19) Europäisches Patentamt
European Patent Office
Office européen des brevets

(11) EP 1 780 955 A1

(12) EUROPEAN PATENT APPLICATION

(43) Date of publication:
02.05.2007 Bulletin 2007/18

(51) Int Cl.:
*H04L 12/56* (2006.01) *H04L 12/26* (2006.01)

(21) Application number: 05023580.3

(22) Date of filing: 28.10.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: SIEMENS AKTIENGESELLSCHAFT
80333 München (DE)

(72) Inventors:
- Freire, Mario
PT-6200-330 Covilha (PT)
- Garcia, Nuno
PT-6200-502 Covilha (PT)
- Hajduczenia, Marek
PT-4505-314 Fiaes (PT)
- Monteiro, Paulo
PT-3830-209 Ilhavo (PT)
- Silva, Henrique
PT-3030-076 Coimbra (PT)

(74) Representative: Fischer, Michael
Siemens AG,
Postfach 22 16 34
80506 München (DE)

# (54) Monitoring method and apparatus of processing of a data stream with high rate/flow

(57) This aim of this invention is achieved by a monitoring method of processing of a data stream that is sequentially inputted at a high rate/flow in an element where said processing is executed, wherein:
- said data stream has at least one valuable self-similarity property that interacts with performance of said processing;
- storing and estimation means are used to provide a self-similarity degree after measuring values in a sampled data set from the inputted data stream;
- said self-similarity degree is defined as Hurst parameter that is estimated by mean of an Embedded Branching Process (EBP) with related crossing tree structure und crossing levels;

characterized in that the invention provides further new features:
a modified Embedded Branching Process (called mEBP) is used, wherein:
- said sampled data set is comprising a first previous stored aggregated sample of a plurality of incoming data and a second current sample of a single new incoming data;
- for estimating a new Hurst parameter, said crossing tree structure for the previous stored aggregated sample is actualized according to the new incoming data;
- said actualization of calculated crossing tree structure is provided by selecting a limited and adaptable number of crossing levels for measuring values, by using minimal storing means for the previous stored aggregated sample as well as by computing in real-time at least one mean value of the previous stored aggregated sample with a measured value of the current sample in order to minimize the estimation time of the new Hurst parameter.

FIG 6

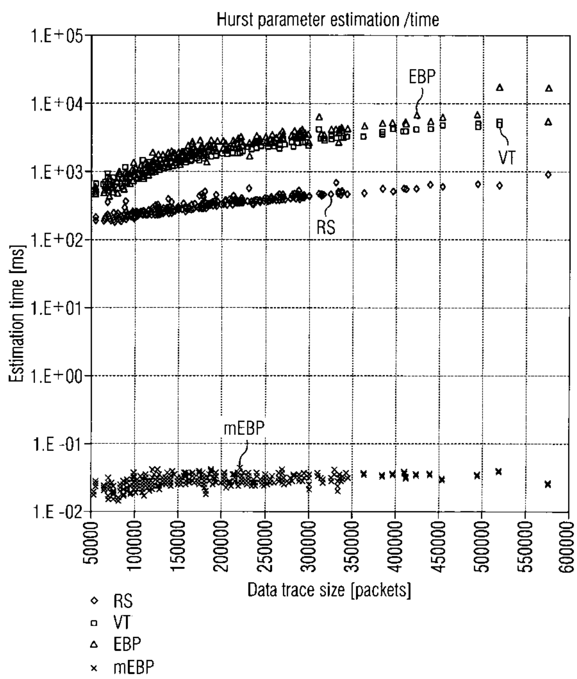


EP 1 780 955 A1

## Description

The present invention relates to a monitoring method as well as an apparatus (network element) of processing of a data stream that is sequentially inputted at a high rate/flow in an element where said processing is executed.
The present invention will be basically illustrated in the field of networking for example in a telecommunication network wherein a heavy loaded traffic of data to be processed can arise e.g. in a network element like a switch or a router.
However the matter of the present invention can be applied to more than the field of networking. Essentially, the main technical problem addressed by the disclosed invention is the lack of real-time and reliable means of estimating a level of self-similarity in an arbitrary data series, which may be obtained from a plethora of events (telecommunication data flows, cardiograms and other medical phenomena graphs, fractal data and images, artificial intelligence and knowledge engineering processes, shape pattern recognition algorithms, biological processes, stock market price analysis etc.).
In terms of telecommunication networks, self-similarity embedded within a data flows that is for example inputted in a network element at a high rate or flow (load), may be observed at a vast number of available time scales (from milliseconds to hours and even days, months) and results in difficulties when estimating for example a required buffer size to store the necessary data to compute the degree of self-similarity of the process with an acceptable level of confidence. Also, non self-similar traffic may introduce instability into the network, and this event requires a reliable monitoring. A lack of self-similarity assessment and self-similarity aware applications in the control layer, in the particular case of the network structure, results in the degradation of service quality and in increased complexity to provide realistic SLA (Service Level Agreements). Moreover, introduction of FSAN (Full Service Access Networks) regime is expected to increase the problems with self-similar data flows, since more heavy-tailed data sources will be present and aggregated at various levels, leading to congestion management problems.
A Hurst parameter is one of the metrics used to assess the degree of self-similarity of a data series/stream.
To introduce this concept the use of the Hurst parameter as a measuring means for self-similarity has been well described in "M. Roughan, D. Veitch, P. Abry, Real-Time Estimation of the Parameters of Long-Range Dependence", IEEE/ACM Transactions on networking, Vol. 8, No. 4, August 2000. In this paper, an on-line version of the Abry-veitch wavelet-based estimator of the Hurst parameter is presented, wherein an implementation for data traffic control in a network from 10 until 155 Mb/s is possible. In this order of rating, this method can be employed under so-called real-time conditions. For growing data rates e.g. up to 1 Gbps at an input of a processing element, this method requires however a further implementation of hardware and prototyping since common computers (used in this paper) do not allow for a precise time measurement under 1ms. By the present invention, this limit does not satisfy for "very high" real-time conditions. This paper claims to be real time, though the Hurst parameter is not calculated for each arriving packet, but rather for a packet aggregate, containing a predefined number of individual packets, or packets sampled at a predefined sampling rate. It includes a reference to 1:1000 aggregation ratio, so that a method to work packet-by-packet is not allowed. It should be also mentioned that AV requires an analysis phase (wavelet transformation costs 1,8 s for 1000 data elements) prior to the estimation of the Hurst parameter which also costs 4,8 s for 1000 points. Although the authors claim that this method does not require heavy computing means, it is hence well-known that wavelets based method are relative heavy in terms of computation, even if an approximated wavelet transform is typically used, like a Fourier Transform. It can produce good results as far as a set of boundary conditions are met, namely the number of samples in an observation window, sample values etc. Hence, this method does not base on more generic principles, requiring nothing more than simple arithmetic operations to do reach the same target. In the same way, this method requires significant memory resources due to wavelet transform operations and data storage at each new estimation of the Hurst parameter. As said a highly optimized hardware is required to implement this monitoring method for the estimation of self-similarity - it needs hardware implemented wavelet filters.
The state-of-the-art discloses as well further (non wavelet based) estimators for providing a Hurst parameter:

- Rescaled Statistic methods (=R/S) (sometimes referred to as pox-plots),
- Variance Time methods (=VT),
- Whittle's estimators and their derivatives (=WHI) (also referred to as periodogram based analysis),
- Detrended Fluctuation Analysis (DFA),
- Embedded Branching Process method (EBP).

In this way, it can be referred to "Owen Dafydd Jones, Yuan Shen, Estimating the Hurst Index of a Self-Similar Process via the Crossing Tree", IEEE Signal Processing Letters, Vol.11, No. 4, April 2004, wherein the Hurst index expresses the relative rates of space and time scaling present in a process (for example, in an processing element in which a traffic flow is inputted) and is accepted as a fundamental characteristic. In this reference, it has been developed both an estimator for the Hurst parameter, which is called an Embedded Branching Process (= EBP) estimator, and a statistical test for self-similarity. The EBP estimator and self-similarity test are applied to two local-area network (LAN) traffic traces by using a related crossing tree, wherein crossing points in a sample path can be extracted under different crossing levels.

From each trace, packet arrival times and lengths can be extracted, from which a "1-0" or "on-off"-process is formed. After integrating this and subtracting m·t, where m is a mean byte arrival rate at time t, a continuous self-similar process can be obtained for testing the estimator. In numerical experiments using simulated data, the EBP-estimator based on diadic crossing tree performs significantly better than following three other estimation methods based respectively on DFA = Detrended Fluctuation Analysis, R/S = Rescaled Range Analysis or also WAV = wavelet analysis like the Abry-veitch wavelet-based estimator of above mentioned reference (Roughan et al.). Concerning a Whittle based estimator (=WHI), it has been shown that it is unreliable in many situations, as particular, it is not robust when applied to non-stationary or non-Gaussian processes.

In a general case, all cited estimators R/S, VT, WHI, WAV (Abry-Veitch), DFA and EBP operate unfortunately in a retrospective manner, meaning that a whole examined data series/stream must be available in order to estimate the value of the Hurst parameter. That observation is true for all above-mentioned self-similarity estimators, since their application requires a complete data series to examine it at various aggregation scales and estimate the variations in the aggregated sequence values, autocorrelation or variance over data.

The lack of real-time means for estimation of the Hurst parameter value and common application of retrospective methods of data trace analysis means that the information about the current self-similarity ratio of the observed data sequence can be established only with a certain delay. Such a delay is unacceptable for high-speed data networks, where a feedback loop imposed by the network control layer should have the capacity to respond to variations in the congestion level within milliseconds from their occurrence. Currently available Hurst parameter estimators are thus more suitable for academic studies of the data flows rather than for industrial application in the network control equipment like optical networking.

Current deployment of IPv6 compatible network equipment along with the increasing concern about transmission efficiency and utilization of available hardware resources, as well as the on-going trend to minimize the financial investments when deploying new network links, means that the times of over-provisioning network resources are over. The available buffering space in routers and relays must be used efficiently and in the light of steady increase in the overall network traffic, and this requires application of self-similarity aware monitoring and control mechanisms, allowing for optimum utilization of the already deployed and future network resources. Extension of hardware components depending on the flow/load of the traffic is not a flexible issue, even if this hardware can be obtained with low cost.

Moreover, self-similarity issues are not limited to the telecommunication domain as also previously said, since their presence has been discovered in a plethora of other telecommunication unrelated fields. Self-similar and fractal analysis of aging and health cycles in the field of medical sciences as well as high frequency analysis of heart rate and brain waves prove that a fast method of Hurst parameter estimation might become a critical issue in the coming years, eventually being its immediate field of application. Application of the disclosed method in the already digitalized equipments for heart and brain analysis, probing the changes in the self-similar nature of physiologic patterns in real time, may open new doors to patient monitoring and diagnosis. Growing applications of fractal image coding techniques and face / voice recognition methods also require application of self-similarity detection procedures, though none is currently available.

Most of the depicted self-similarity application fields suffer mainly from the retrospective character of the currently available Hurst parameter estimators and the need for large storage space to accommodate the whole examined data trace prior to its processing. A real-time Hurst parameter estimator without extended requirements e.g. in terms of data storage space or powerful computational equipment, would be a valuable tool for numerous fields of science, of which real time traffic monitoring in telecommunications networks stems out as one of the most natural applications.

Heuristically, long-range dependence manifests itself in the presence of cycles of all frequencies and orders of magnitude, displays features suggestive of non-stationarity, and has been found to be relevant in numerous fields of science.
Traces of self-similar behaviors have been discovered and studied in:

- financial market (stock market prices analysis, price predictions and analysis, etc),
- hydrology,
- geology
- climate and global warming prediction
- biology and related medical sciences (for analysis of patient heart beat and its dynamics, life signs, dynamics of aging and health processes, DNA sequencing, etc.),
- voice and face / shape pattern recognition,
- music analysis / security / pattern recognition,
- self-similar pattern coding / decoding of data stream and images,
- telecommunications

- and so on.

It is therefore the aim of this invention to provide a monitoring method of processing of data at high rate/flow that basically based on a EBP-estimation for a Hurst parameter, so that the retrospectivity of data trace analysis is minimized.

As well further data storage means, hardware extension (also low-cost one) or time-cost processing/computing means should be ideally avoided.

The present invention could be applied for a plethora of other telecommunication unrelated fields, like at least all of those cited above wherein self-similarities have a significant role in order to achieve a optimum in the processing of data.

This aim is achieved by the present invention which discloses a monitoring method of processing of a data stream that is sequentially inputted at a high rate/flow in an element where said processing is executed, wherein:

- said data stream has at least one valuable self-similarity property that interacts with performance of said processing;
- storing and estimation means are used to provide a self-similarity degree after measuring values in a sampled data set from the inputted data stream;
- said self-similarity degree is defined as Hurst parameter that is estimated by mean of an Embedded Branching Process (EBP) with related crossing tree structure und crossing levels;

characterized in that the invention provides further new features:

a modified Embedded Branching Process (called mEBP) is used, wherein:

- said sampled data set is comprising a first previous stored aggregated sample of a plurality of incoming data and a second current sample of a single new incoming data;
- for estimating a new Hurst parameter, said crossing tree structure for the previous stored aggregated sample is actualized according to the new incoming data;
- said actualization of calculated crossing tree structure is provided by selecting a limited and adaptable number of crossing levels for measuring values, by using minimal storing means for the previous stored aggregated sample as well as by computing in real-time at least one mean value of the previous stored aggregated sample with a measured value of the current sample in order to minimize the estimation time of the new Hurst parameter.

Since nothing has to be stored_except for single statistics from the previous stored aggregated sample, no further data storage is needed.

Additionally, the Hurst estimation uses no transform but only a set of previous statistics and a current value, thus the computing for the estimation is extremely simplified as well as accelerated in comparison to all methods mentioned in the state-of-the-art. nA extremely short Hurst parameter estimation time of 1ms can be achieved, since a known wavelet based method necessitates 4,8s (and 1,8s for the prior analysis phasel). A performance ratio of about 500 for the estimation is hence provided for a 1:1000 aggregated sample. By furthermore incoming data flows of bigger rate orders like 1 Gbps (instead of 155 Mb/s), this performance ratio is also once again extremely increased.

It is also possible to implement this method in any programmable processor (DSP) with enough processing power to handle the incoming data stream. Hence the method presents provides a high universality that does not need any further heavy or low-cost special software and hardware.

The new Hurst parameter calculation method is hence advantageously simply performed with statistical means like a pre-calculated statistics value, based on said mean value of the previous stored aggregated sample - or its variance - and the number of samples. By this way the whole sampled points do not have to be re-computed. The only new value is the current sampled data point, so that the estimation of a new value of Hurst parameter is providing such that a complete trace of whole incoming data is avoided.

The processing element can also perform a data traffic control for said incoming data by a limited traffic capacity. Hence, a sudden overload or overflow of incoming data can be predicted and avoided.

The element can have different functionalities on the incoming data that are non-exhaustively an acquisition of said incoming data, an analysis of said incoming data, a rendering/computing of said incoming data, etc.

with respect to the method, a further use of the above mentioned monitoring method is also claimed, wherein incoming data can be telecommunication data, medical data or images, financial data, fractal data or images, artificial intelligence data or knowledge engineering processes, pattern recognition data, weather data, geological data, geographical data, spatial data etc. In another words, the domain of application or use of the method is not restricted to the telecommunication field.

In another embodiment of the invention, a network element with traffic estimation means according to the monitoring method is presented and comprises basically:

- a first Hurst parameter estimator based on modified Embedded Branching Process (mEBP) at input side of network element in order to estimate the Hurst parameter of an incoming data stream;
- a data access controller which is triggered by the first Hurst parameter estimator in order to transmit or to drop data of the data stream according to the value of Hurst parameter and to the traffic capacity of transmission.

More advantages of the invention are supported in all dependant claims of the present application.

Examples of the invention are hereinafter described with reference to the drawings. In the drawings:

Figure 1 shows:

a) above a first graph of a sample path and crossing points obtained by a typical EBP-estimator and by the modified mEBP-estimator for a data trace and

b) below a second graph with a crossing tree structure obtained by a typical EBP-estimator and by the modified mEBP-estimator for the same data trace;

Figure 2 shows the estimated time for providing the Hurst parameter vs. a the data trace size (packets of data) for the mEBP-estimator obtained with a common calculator;

Figure 3 shows estimation time of the Hurst parameter vs. an aggregation level using RS- and VT--estimators;

Figure 4 shows values of the Hurst parameter vs. an aggregation level using RS- and VT-estimators;

Figure 5 shows the estimated Hurst parameter vs. a time scale for RS-, VT-, EBP- and mEBP-estimators;

Figure 6 shows the estimation time for providing the Hurst parameter vs. a the data trace size (packets of data) for RS-, VT-, EBP- and mEBP-estimators;

Figure 7 represents a network element with an implementation of at least one mEBP-estimator;

Figure 8 shows a block diagram with another network equipment managed by three mEBP-estimators.

Figure 1 shows above a first graph - part (a) - of a sample path and crossing points obtained by a typical EBP-estimator and by the modified mEBP-estimator for a data trace of 1000 aggregated samples and below a second graph - part (b) - with a crossing tree structure obtained by a typical EBP-estimator and by the modified mEBP-estimator for the same data trace. The principle for providing a crossing tree with crossing points from a sample path is already described in the state-of-the-art according to the paper of Owen Daffyd Jones and Yuan Shen. The horizontal axe of both graphs designates the number of packets (between 0 and 1000) that are received in a processing element. On vertical axe the crossing size (for example the inter-arrival time in ms between packets) is used. In the second graph, a horizontal calculation regime equal to retrospective Hurst parameter estimation as obtained in a commonly used EBP-estimation is represented by mean of boxes B1, B2, B3, B4, B5 that indicates the sampling resolution (for example about 2ms inter-arrival time for the first box B1) of the sample path and crossings. It is relevant to notify that the density of crossing points in the first box B1 is considerably higher than the one in a box with upper level. A further horizontal calculation regime employed in mEBP-estimation is represented by means of the dashed vertical lines (for clarity, calculation points for third levels and above were depicted). More information on both graphs is given in the following text.

Again in reference with the state-of-the-art according to the paper of Owen Daffyd Jones and Yuan Shen, a further approach based on the adapted calculation of the Hurst parameter is given for introducing the modified mEBP-estimator for a real-time, minimum delay method for estimating the value of the Hurst parameter. Moreover, the employed estimator can be an effective means of evaluating the Hurst parameter value in real-time using cost-effective hardware, already present in the network control units. A set of simple modifications to the original EBP estimator allows for its application for real-time calculation of the Hurst parameter of the desired process (such as for example, a traffic flow). The employed modifications to the original EBP estimator include the following elements:

1) The original EBP estimator calculates the whole crossing tree structure for the given crossing level k at a time t, resulting in the retrospective character of the estimation. For the given crossing level *k,* the crossing points are estimated always for a pair of sampled data points, namely $X_{i-1}(t)$ (previous) and $X_i(t)$ (current), then the estimator moves on to another pair of points and so forth. Therefore, at a certain moment of time $t_i$, it is possible to calculate a full set of crossing tree points for all desired $k$ levels only for the current ($X_i(t)$) and previous data points ($X_{i-1}(t)$). This way the value of the Hurst parameter at some arbitrary moment of time $t_i$ can be estimated using information only about the current and the previous data points as well as additional statistical parameters (namely data sequence mean and variance as well as aggregated totals of all previous samples and total of aggregated squared previous data samples). The whole k level crossing tree structure can be calculated at the given moment of time without the need of processing or storing the whole data trace. Such an approach is equal to vertical rather than horizontal calculation regime and is depicted in Figure 1(a) and (b). In the horizontal calculation regime, a whole tree level is calculated at once for the examined data trace one at a time. Once completed, the estimator moves one level up and performs the crossing tree construction for the current aggregation ratio. Such an approach obviously requires the full set of the examined data, which has to be traversed at various detail levels in search of the possible crossing points. The modified EBP estimator targets elimination of Hurst parameter estimation delay by applying crossing tree construction process only to the current data point. Therefore, the tree structure is constructed in the vertical rather than horizontal direction.

2) In order to calculate the value of the Hurst parameter for the given points, the estimator defined in the previous cited state-of-the-art is employed according equation (0.1), though its value is estimated for every single point of the examined flow, resulting in an estimation curve for the whole examined data trace rather than a single value with the confidence intervals. This way the evolution curve of the Hurst parameter value may be plotted, allowing for more precise estimation of the true value of the Hurst parameter as well as elimination of numerically unstable solutions. Moreover, such an approach allows for detailed insight into Hurst estimation process and immediate identification of possible numerical instabilities.

$$\hat{H}_n = \frac{\log(2)}{\log(\hat{\mu}_n)} : \hat{\mu}_n = \sum_{k=1}^{N(n)} \frac{Z_k^n}{N(n)} \tag{0.1}$$

In a general case, estimation of the Hurst parameter is based on the known 'IID' assumption (Independent Identically Distributed), due to its simplicity and robustness as well as low computational cost and medium implementation complexity. The 'IID' assumption allows for estimation of the data sequence mean and variance, which are recalculated for each newly considered data sample. Recalculation of the sample mean is quite straightforward. The sample mean for the previous ($X_{i-1}(t)$) point is defined as follows:

$$\overline{X}_{i-1} = \frac{1}{i-1} \sum_{m=1}^{i-1} X_m(t) \tag{0.2}$$

while the sample mean value for the current ($X_i(t)$) point can be estimated based on the previous mean value using a simple conversion:

$$\overline{X}_i = \frac{1}{i} \sum_{m=1}^{i} X_m(t) = \frac{1}{i}\left( \sum_{m=1}^{i-1} X_m(t) + X_i(t) \right) \tag{0.3}$$

which in turns leads to:

$$\overline{X}_i = \frac{\overline{X}_{i-1} \cdot (i-1) + X_i(t)}{i} \tag{0.4}$$

This way the current value of the sample mean can be estimated in a straightforward manner using the stored previous value of the sample mean as well as the number of data samples used to calculate it.
similar assumptions and calculation approach results in estimation of the sample variance without the need to keep track of all the sample values within the examined data sequence. In a general case the sample variance for the previous data point ($X_{i-1}(t)$) is given by the following equation:

$$\sigma_{i-1}^2 = \frac{1}{i-2}\sum_{m=1}^{i-1}\left(X_m(t) - \bar{X}_{i-1}\right)^2 \qquad (0.5)$$

while the sample variance for the current data point ($X_i(t)$) is estimated by equation (0.6):

$$\sigma_i^2 = \frac{1}{i-1}\sum_{m=1}^{i}\left(X_m(t) - \bar{X}_i\right)^2 = \frac{1}{i-1}\left(\sum_{m=1}^{i-1}\left(X_m(t) - \bar{X}_i\right)^2 + \left(X_i(t) - \bar{X}_i\right)^2\right) \qquad (0.6)$$

Equation (0.6) can be linked with (0.5) by estimating the following relationship:

$$\begin{aligned}\sigma_i^2 &= \frac{1}{i-1}\sum_{m=1}^{i}\left(X_m(t) - \bar{X}_i\right)^2 = \frac{1}{i-1}\left(\sum_{m=1}^{i} X_m^2(t) - 2\cdot\bar{X}_i\cdot\sum_{m=1}^{i} X_m(t) + i\cdot\bar{X}_m^2\right) = \\ &= \frac{1}{i-1}\left(\sum_{m=1}^{i-1} X_m^2(t) + X_i^2(t) - 2\cdot\bar{X}_i\cdot\left(\sum_{m=1}^{i-1} X_m(t) + X_i(t)\right) + i\cdot\bar{X}_m^2\right)\end{aligned} \qquad (0.7)$$

$$\sum_{m=1}^{i-1} X_m(t) \qquad (0.8)$$

$$\sum_{m=1}^{i-1} X_m^2(t) \qquad (0.9)$$

Using (0.7), in order to estimate the current value of the sample variance, it is necessary to store the aggregated value of all previous samples (0.8), as well as the aggregated value of squared previous samples (0.9). An alternative approach aims at estimating the relation between the current and previous value of the sequence variance in the following form:

$$\sigma_{i-1}^2 = \frac{1}{i-2}\sum_{m=1}^{i-1}\left(X_m(t) - \bar{X}_{i-1}\right)^2 = \frac{1}{i-2}\left(\sum_{m=1}^{i-1} X_m^2(t) - 2\cdot\bar{X}_{i-1}\cdot\sum_{m=1}^{i-1} X_m(t) + (i-1)\cdot\bar{X}_{i-1}^2\right) \qquad (0.10)$$

Equation (0.10) is used to estimate the aggregated value of squared previous samples:

$$\sum_{m=1}^{i-1} X_m^2(t) = (i-2)\cdot\sigma_{i-1}^2 + 2\cdot\bar{X}_{i-1}\cdot\sum_{m=1}^{i-1} X_m(t) - (i-1)\cdot\bar{X}_{i-1}^2 \qquad (0.11)$$

Next the current variance value can be further derived to the following form;

$$\sigma_i^2 = \frac{1}{i-1}\left(\sum_{m=1}^{i-1} X_m^2(t) + X_i^2(t) - 2\cdot\bar{X}_i\cdot\left(\sum_{m=1}^{i-1} X_m(t) + X_i(t)\right) + i\cdot\bar{X}_i^2\right) = \\ = \frac{1}{i-1}\left((i-2)\cdot\sigma_{i-1}^2 + 2\cdot\bar{X}_{i-1}\cdot\sum_{m=1}^{i-1} X_m(t) - (i-1)\cdot\bar{X}_{i-1}^2 + X_i^2(t) - 2\cdot\bar{X}_i\cdot\left(\sum_{m=1}^{i-1} X_m(t) + X_i(t)\right) + i\cdot\bar{X}_i^2\right) \quad (0.12)$$

It is simple to observe that this approach (0.12) requires more data storage, since to calculate the current variance value, the aggregated value of all previous samples (0.8) is required, along with the previous variance and mean values. Moreover, the calculation cost of such an equation (0.12) is larger when compared with (0.7), thus the equation (0.7) is used to estimate the sequence variance for the examined time series in the disclosed mEBP algorithm.

The whole calculation of sample path in data traffic, crossing tree, crossing points, crossing size can be implemented in a software program (for example as a routine in a C++ code that manages the data traffic flow of a network element and predicts an overload of data through monitoring of the calculated Hurst parameter with the mEBP-estimator). This program can be executed in a common computing apparatus like a PC. By mean of such a program, more technical effects can be monitored, for example the temperature of a processor means used in a router element. The monitoring of the data traffic is hence not the single application of the invention.

Such a presented C++ based implementation of the mEBP Hurst parameter estimator requires a series of parameters for proper operation, namely:

- a first Boolean flag indicating whether the used IID Hurst estimation should have the bias corrected or not;
- a second Boolean flag indicating whether data files with calculation results are to be saved to hard disk or not (optional);
- a third Boolean flag indicating whether the static type variables employed within the procedure are to be reset to their default values (including destruction of the dynamic data arrays and setting the remaining variables to their default values); a resetting procedure is also called automatically if the requested level range changes (previously requested calculation levels are stored in static variables ensuring data storage between subsequent calls of the method);
- unsigned integer variables passing the value of starting and ending levels of the crossing tree that is supposed to be constructed for the given data point; obviously, ending level must be greater than starting level, since at least one calculation cycle should be performed;
- double type variables passing the X and Y (horizontal, vertical) coordinates of the current data point belonging to the examined data trace;
- a double type variable storing the value of the Y axis size of a single crossing tree level (difference between two subsequent crossing points); the value of this parameter should be adjusted to the maximum anticipated data span in the Y axis - for Ethernet data value of 25.0 allows for estimation of (1518-64)/25.0 = 58 crossing levels for level 1 of the crossing tree, resulting in a significant precision of data sampling process. Application of dDelta = 1 for Ethernet data results in a very prolonged data processing since 1454 crossing levels are created for tree level 1, leading to huge calculation delay without significant increase in the quality of the Hurst parameter estimation. dDelta should therefore be selected in such a manner that the number of expected crossing levels ranges from 10 to 100, depending on the calculation precision required by the given application.

The previously presented procedure, once completed, returns a vector (STL template container) with 3 data fields, representing lower confidence interval, actual value and upper confidence interval for the estimated Hurst parameter. Providing that the second Boolean flag is set to true, calculation data is also stored in the binary files, saved in the current program directory.

The above implementation of the mEBP Hurst parameter was examined on a series of data traces obtained from a server (NLANR), covering the period of 1 whole month (February 2005). The collected data set consist of 28 days worth of network data traces collected at the measurement point in Memphis. Each day featured 8 data traces, except for the 2nd of February, when only 5 data traces were collected, giving in total 221 separate data samples, including in total 41.359.662 data packets in the known ".tsh" format. Data traces were collected at random moments of the day to illustrate varying traffic conditions thus detailed analysis of the Hurst parameter estimator is possible, since it is expected that daily and monthly fluctuations in the value of the Hurst parameter should be observed.

The proposed mEBP estimator can be very similar to wavelet transform estimators in terms of the precision of the evaluated Hurst parameter value. The estimated Hurst parameter value fluctuates highly at daily and monthly time scales, ranging from 0.98687 to 0.86094 (25.186% variation for the expected 0.5 - 1 Hurst parameter scale). The average Hurst parameter value for the mEBP estimator equals to 0.9328, with the standard deviation of 0.026 and variance of 0.000691. The observed fluctuations in the measured Hurst parameter value result from varying traffic conditions in the given data collection point. It was anticipated that there would be at least slight variations in the Hurst parameter value at the monthly scale. Daily scale fluctuations indicate high precision of the proposed mEBP-estimator for Hurst parameter.

Moreover, the calculation time for the proposed mEBP-estimator was measured, when performing data trace parsing on a PIV 2.8 GHz PC computer, running under Windows XP SP2 operating system. No other application was running at the simulation time, and thus the results obtained are expected to be free of any estimation errors according figure 2, wherein the modified mEBP-estimator exhibits an average estimation time (Y-axis) of approximated 0.02835 ms (processing time was aggregated for all examined data packets (X-axis) and then averaged), with the standard deviation of 0.005 and variance of 2.5345E-05. The mEBP-estimator processing time exhibits a slight exponential character though the relation is not that strong and the difference between the minimum and the maximum value is estimated at 0.028ms. Increase in the processing time might be mainly attributed to the increasing number of crossing tree levels that can be constructed on the sampled data stream - along with the increase in the size of the examined data stream, the probability of reaching the top level of a constructed crossing tree increases significantly, thereby leading to an increase of the processing time. It is expected though that the average processing time for the examined method does not exceed a single millisecond, even for very long data traces (in excess of 1E6 data packets), providing that only the first 5 crossing tree levels are calculated (see figure 1(b)). Estimation of higher crossing tree levels only makes sense when comparing the value of the Hurst parameter at different detail levels, to assess the stability of the given examined data trace.

Before introducing figure 3 and 4 in the following text, it is to notify that the modified Embedded Branching Process has been tested along with the reference Hurst parameter estimators on the same set of data traces which were used for initial evaluation of the mEBP method.

Each data trace had its Hurst parameter H estimated for the all of the following methods: Rescaled Statistics RS, Variance Time VT, Embedded Branching Processes EBP and modified mEBP. whittle-based estimators WHI due to their numerical instability and unsuitability for non-Markovian processes were not considered during examination. The RS Hurst parameter estimator was calculated for the maximum aggregation range of 2000 packets, since larger aggregation scales do not result in increased H estimation precision and lead to unnecessary processing effort. Similarly, the VT estimator was calculated for the maximum aggregation level of 10 (1024 packets), since deeper aggregation caused excessive processing without increase in the estimation precision of Hurst parameter H. The EBP estimator was calculated for crossing tree levels ranging from 1 to 5 - higher levels of the crossing trees again add to calculation complexity without adding precision to Hurst parameter estimation. The modified mEBP-estimator was processed along with the input traces and crossing tree structure for levels 1 to 5 was estimated. The same observation as for original EBP applies here.

Figure 3 depicts the relation between the length of the estimation process (expressed in ms as the time between the beginning and the end of the estimation process for the given estimator) and the aggregation scale. The examined aggregation scales ranged from 100 to 30000 packets for the RS estimator and from 7 to 15 for the VT estimator (equivalent to 128 to 32748 packets). Figure 4 depicts the relation between the estimated value of the Hurst parameter H and the aggregation scale for RS and VT methods. Low aggregation scales for the RS estimator result in overestimation of the Hurst parameter, though increasing the aggregation scale does not lead to curve saturation, and for longer data traces (in excess of 1e6 packets), the estimated Hurst parameter value drops continuously along with the increase in the aggregation scale. Similarly, the VT estimator exhibits overestimation of the Hurst parameter for low aggregation scales while decrease in the aggregation level results in a rapid drop in the value of the estimated Hurst parameter. It is worth noting that the VT curve degrades much faster than the RS estimator curve, though the VT estimation time reaches some point of equilibrium around 1ms, while the RS estimation time rises exponentially to reach approximately 5 s for a 3E4 packet data trace. The utilized aggregation scales for both RS and VT estimators were selected at 2000 and 10 (1024) packets, respectively, based on the approximated estimation time.

The employed RS and VT estimators were then applied, along with the EBP and mEBP, to the collected 221 data traces from NLANR server, including the total amount of 41.359.662 data packets. The Hurst parameters values estimated for the examined traces (sample time / packets) are depicted in Figure 5. The RS and VT estimators, as expected, over-estimated or under-estimated the Hurst parameter value, respectively. Such a behaviour of the Hurst parameter estimators was expected, since the VT method is typically considered to be efficient in detecting self-similarity in the examined trace, while it is inefficient in estimating the Hurst parameter value, both in terms of the processing time required to complete the calculation cycle as well as the estimation error. Moreover, the VT estimated Hurst parameter for all examined 221 data traces oscillates around the average value of 0.7576 (variance 2.443E-06, standard deviation of 0.00156), not indicating any radical value fluctuations for such a long examination range. It is expected that the self-similarity rate for data traces collected over such a long period of time and during various periods of the day should exhibit more radical variations in the Hurst parameter value. On the other hand, the RS estimator - again utilized more often to detect the self-similarity in the examined data trace - overestimates the Hurst parameter value, which oscillates around the average value of 0.9963 (variance 6.523E-07, standard deviation 0.00081). Again it is difficult to expect that the examined data traces have such constant self-similarity ratio both at monthly and daily time scales. The EBP estimator, as described in the state-of-the-art, is very similar to wavelet transform estimators in terms of the precision of the evaluated Hurst parameter value. This fluctuates highly at daily and monthly time scales, ranging from 0.98687 to 0.86094 (25.186% variation for the allowed 0.5- 1 Hurst parameter scale). The average Hurst parameter value for the EBP estimator equals to 0.9328, with the standard deviation of 0.026 and variance of 0.000691. The variance for the EBP estimation of the Hurst parameter is over 283 times greater than the respective parameter for the RS estimator and 1016 times greater the same parameter estimated for the VT method. That illustrates the visible advantages of the EBP over RS and VT estimators. The proposed mEBP estimator, since it is based on the original EBP method, exhibits exactly the same performance parameters in terms of Hurst parameter estimation quality. The curves for mEBP and EBP on figure 5 are superimposed and numerical values indicate compliance to 7 decimal digits. Therefore, in terms of the quality of the Hurst parameter estimation, the mEBP and EBP methods are indistinguishable.

The next chart, illustrated by figure 6, exhibits the estimation time (in ms) measured for particular estimation processes versus the processed size of the data trace size (expressed in the number of packets). Since the data trace format (".tsh") consists of fixed-size packet headers with no payload, the processing time of any trace for any method is assumed to be I/O operation dependent and constant for all examined methods. Apart from the modified mEBP-estimator, all other estimators RS, VT, EBP were calculated once the whole data trace was processed and stored in the computer memory. No packet processing time needs therefore to be included in the considerations. In case of the mEBP estimator, the processing time is equal to average calculation time necessary to estimate the Hurst parameter value for a particular data point. Since the temporal resolution of the employed timer is equal to 1ms, the minimum and the maximum processing times for the mEBP were equal to 0 and 1ms, respectively. In order to assess the real mEBP processing time, a more detailed timer is required. With the constant maximum aggregation level of 2000 packets, the RS estimator features almost linear increase in the estimation time (from 172 to 922 ms) for the examined set of data traces (data trace size varies from 53132 to 573643 packets - more than 1 order of magnitude variation). The VT estimator with the fixed maximum aggregation level of 10 (1024 packets) along with the original EBP estimator feature a weak logarithmic character of their respective curves. The VT curve has a weaker logarithmic property, starting from 516 ms for 53132 packet threshold and breaching the 1s processing time for data trace size of 1E4 packets. The maximum observed processing time occurs for 573643 packets and is estimated at 5.687 s. The EBP estimator, starting from 437ms for 53132 packet threshold, breaches the 1s processing time around the same value as the VT method (1E4 packets). However, its maximum processing time for 573643 packets is estimated at 17.969 s, which is almost 3 times longer than the respective value for the VT estimator. It turns out therefore that the EBP estimator is the slowest of the examined classical estimators, thus the RS method seems to exhibit relatively better performance with under-single second processing time. However, the modified mEBP-estimator exhibits a 4 orders of magnitude improvement in the Hurst parameter estimation time (when compared with the RS estimator), since its average estimation time is approximated at 0.02835ms (processing time was aggregated for all examined data packets and then averaged), with the standard deviation of 0.005 and variance of 2.5345E-05. The mEBP-estimator processing time also exhibits a slight exponential character though the relation is not that strong and the difference between the minimum and the maximum value is estimated at 0.028ms. It is therefore clear that Hurst parameter estimation using the mEBP method is the quickest available solution, featuring both an excellent processing speed as well as very good estimation precision.

Figure 7 represents a module of a network element with an implementation of at least one mEBP-estimator according to the monitoring method of the present invention. It can be implemented in an application of mEBP Real-Time Hurst Parameter Estimator for traffic classification and buffer overflow protection machine concept for Passive Optical Networks xPONs.

In this network element with traffic estimation means following components are comprised:

- a first Hurst parameter estimator 1 based on modified Embedded Branching Process mEBP at input side of network element in order to estimate the Hurst parameter of an incoming data stream 2;
- a data access controller 6 which is triggered by the first Hurst parameter estimator 1 in order to transmit or to drop data of the data stream according to the value of Hurst parameter and to the traffic capacity of transmission.

Furthermore transmitted data are forwarding in a memory buffer 7 depending on a priority class like for priority according to standard IEEE 802.1p.

In figure 7 the incoming data packets are hence classified in a dependant way of their assigned priority. For that purpose following components are necessary:

- a packet classifier 3 distributes packets of data at output of first Hurst parameter estimator 1 according to different priority classes of data;
- a packet that is outgoing said packet classifier 3 is transmitted to one of parallel distributed memory buffers 7 over a second Hurst parameter mEBP-estimator 4 and, further on, over the data access controller 6 which can interrupt (or discard) or drop the transmission of a packet.

The quality of data traffic or processing can be estimated in a Hurst parameter mEBP-estimator 1, 3, in which at least one of following crossing levels can be used: source-destination address pairs with byte count; source-destination address pairs with packet count; packet size; packet size with byte count; packets inter-arrival time; channel byte load; channel packet load; protocols in packets.

Principally an overflow protection mechanism of one or more memory buffers 7 can be implemented such that instead of dropping packets only when the buffer 7 is already under overflow condition, it is possible to counteract the current network load conditions by predicting the approaching instability situation, in which the buffer will simply stop accepting new packets due to overflow. Such prediction mechanism is based on the following measurements of incoming traffic: average data rate for the given data stream (as for standard network calculus); Hurst parameter value describing the predictability of the traffic (new approach to traffic measurement, based on application of real-time Hurst parameter measurement); total amount of free memory in the buffer space associated with the given traffic class / priority / stream.

Based on the above traffic measurements, it is possible to estimate an approximated buffer overflow time, assuming that the incoming data stream maintains its current parameters. Obviously, such prediction can be updated in real-time, thanks to application of the real-time Hurst parameter mEBP-estimator. By this way, the incoming data stream can be continuously monitored against high burstiness (which corresponds to high data stream unpredictability), and the amount of free memory in the buffer space can be adjusted accordingly.

Since the standard telecommunication calculus does not provide means for estimating the buffer overflow event time with a reasonable approximation (estimations are typically too optimistic and buffers do overflow before the data stream reduction mechanism is activated), mainly due to the highly bursty nature of e.g. the IP data streams 10, it is necessary to employ the Hurst parameter measurement based approach, which allows for high quality estimation of the overflow event based on the measurement of the traffic burstiness.

A buffer overflow protection mechanism can be described as following:

- assuming that the Hurst parameter value for the measured link is high (which means that the incoming data stream 10 is highly unpredictable), the amount of free buffer memory 7 must be increased in order to cope with the amount and nature of the incoming data stream;
- if the currently available memory space is not sufficient to absorb a long data burst, a channel rate reduction mechanism needs to be activated to force a decrease in the arrival rate for the incoming data streams;
- if the measured Hurst parameter value for a given channel is low (around 0.5), the incoming traffic is quite predictable and the amount of free buffer space can be estimated using simple standard telecommunication calculus.

The schematic of the module has the following functionality:

- a newly arriving data packet first passes through the first mEBP based real-time Hurst parameter estimator block 1, which produces the Hurst parameter estimation for the total incoming data stream 2;
- the Hurst parameter estimation value for the incoming data stream 2 along with a memory buffer state feedback signal 8 is used to trigger the packet access control modules for a given traffic class 6, in order to activate/deactivate it/them according to the current channel load situation;
- when the amount of free buffering memory 7 is high, no packets need to be dropped, and thus the packet access control modules 6 perform simple packet relay to the appropriate buffer 7;
- when the amount of free buffering memory 7 is diminishing and the incoming data stream 2 is bursty, the packet access control modules 6 are to be activated and the packet dropping mechanism is to be employed 9 based on the memory feedback signal 8, Hurst parameter estimation for the given traffic class 5, and overall Hurst parameter estimation for the total incoming data stream 2; additionally, the average data rate for the total data stream 10 and particular traffic class 11 are also taken into account;
- packet classification, based on its priority, according to IEEE 802.1p standard, is performed in the packet classifier specialized module 3;
- once assigned to a proper traffic class, the data packet is forwarded to one of the second parallel branched Hurst parameter mEBP-estimators 4, where real time estimation of the Hurst parameter value 5 for the given priority of the data stream is performed;
- the Hurst parameter estimated value 5 is then used to feed the following packet access control block 6, which decides upon admission of the particular packet into the memory buffer 7;
- assuming that the memory buffer 7 assigned for the given priority class is already heavily loaded and the Hurst parameter value 6 for the given stream is high, the packet is discarded as a dropped data packet 9, resulting in the timeout at the subscriber’s application due to lack of response from the packet’s destination;

- otherwise, the packet is forwarded to the appropriate memory buffer 7, where it is stored and then processed in a typical fashion, characteristic of the optical network xPONs.

In the following description a informative example about a traffic prediction mechanism for buffer overflow prevention machine Concept using mEBP-measurements is given and represents a concrete application of the present monitoring method.

It is well known that network traffic has a fractal (self-similar) nature. Recently, the applicant identified 8 dimensions over which traffic could be measured. Their objective was to devise a set of metrics that could effectively assess the tendencies of the shape of traffic in a network. Sudden changes in the nature of traffic are unwelcome, as they stress the network equipment, either by causing underload resulting in instability conditions, or overload, which apart from instability also increases packet/burst loss and deteriorates the user perceived Quality of Service. As to prevent these changes under typical network conditions, we propose a new approach based on the well known fractal properties of traffic, allowing us, with the right set of tools applicable to adequate dimensions of the traffic, to flush and/or retain network equipment buffers in order to produce a stable flow of load onto the next network element, without introducing unreasonable additional delay.

The complete set of dimensions is:

- Source-destination address pairs with byte count;
- Source-destination address pairs with packet count;
- Packet Size;
- Packet Size with Byte Count;
- Packets Inter-arrival time;
- Channel Byte load;
- Channel Packet load;
- Protocols in Packets.

The initial set of dimensions the applicant proposes to monitor are:

- Channel Packet Load;
- Channel Byte Load;
- Packet Inter-arrival time.

These dimensions represent three different features of the examined traffic.

In Channel Packet Load metrics, the amount of packets entering a given network point within an appropriately selected time window, typically of a few milliseconds, is measured. The principle of a sample measurement taken on monitored traces has already presented in the above description. It is observable that a short period of low load is always followed by a period of high load (bursty). This phenomena is also known as "escape to the average", meaning that in a well defined series of data, if one is well above the average, another one will be well below as to compensate.

It is also possible to obtain a histogram of inter-arrival times between consecutive packets. As the behavior of the network is somehow unpredictable, it relies on fractal metrics to assess the trend of the arrival of packets - for example, although it is expected that packets arrive more spaced in time at one particular time of the day (or the week, or the month), with fractal metrics, the trend will still be the same despite of time that is chosen for an analysis.

With this information, the value estimated by our mEBP method can be used to forecast the value of the Hurst parameter for the incoming traffic.

We then some actions are taken in order to forecast the bursty traffic periods when non-burst situations occur, for instance, by manipulating network equipment buffers.

Lets us define the metrics associated with the above chosen dimensions:

- $H_{PL}$: the Hurst parameter studied to model the channel packet load dimension;
- $H_{BL}$: likewise, for the channel byte load dimension;
- $H_{IA}$: likewise, for the Inter-Arrival Time;
  as well as some confidence intervals:

- $\delta_{HPL}$: the deviation we allow $H_{PL}$ to suffer;
- $\delta_{HBL}$: likewise, for $H_{BL}$;
- $\delta_{HIA}$: likewise, for $H_{IA}$;

and also:

- $R_{PL}$: the measured Hurst parameter in the channel packet load dimension;
- $R_{BL}$: likewise, for the channel byte load dimension;
- $R_{IA}$: likewise, for the inter-Arrival Time. The current status of the network traffic (which only indicates its current trend) can now be evaluated, and compared with the set of intervals that are defined by applying the confidence intervals to each of the proposed value for the Hurst metric, to each of the dimensions.

Some basic statistics are also needed, like for instance the current occupancy level of the channel, in terms of both Byte and Packet loads (we call these $O_{BL}$ and $O_{PL}$), and also some average of the last inter-arrival times ($A_{IA}$). The depth of these statistics is to be defined accordingly with the nature and characteristic of the sampling frequency of the data traffic, and also with the depth intended to the estimation of the Hurst parameter, as defined better in its ID. Based on this, a decision table may be established on which the buffer overflow prevention algorithm can be built. Before presenting a possible (and simple, although long) decision table for this control, let us firstly examine what is the meaning of the following conditions:

- $R_{IA} < H_{IA} - \delta_{HIA}$ this indicates that the traffic entry pattern is more regular than expected, so we can expect it to get irregular in a near future (with packets coming at very different inter-arrival times);
- $R_{IA} > H_{IA} + \delta_{HIA}$ this indicates that the traffic entry pattern is more irregular than expected, so we can expect it to get more regular in a near future (either more spaced or more close, depending on the last measures of inter-arrival time);
- $R_{BL} < H_{BL} - \delta_{HBL}$ this indicates that the byte occupancy of the channel is more regular than expected, so we can expect it to get irregular (with peaks, either high if the occupancy is low, or low if the occupancy is high)
- $R_{BL} < H_{BL} - \delta_{HBL}$ this indicates that the byte occupancy of the channel is more irregular than expected, so we can expect it to get regular (with steady traffic, either high if the occupancy is low, or low if the occupancy is high);
- $R_{PL} < H_{PL} - \delta_{HPL}$ this indicates that the number of packets in the channel is more regular than expected, so we can expect it to get irregular (with more packets if the load is low, or low if the load is high);
- $R_{PL} > H_{PL} - \delta_{HPL}$ this indicates that the number of packets in the channel is more irregular than expected, so we can expect it to get regular (with more packets if the load is low, or low if the load is high).

Possible Decision Tables for this scenario are presented in the following pages, where:

- $A_{IA}$ + means that the Average Inter-Arrival time is high (slow packets arriving);
- $A_{IA}$ - means that the Average Inter-Arrival time is low (fast packets arriving);
- $O_{BL}$ + means that the Occupancy of the channel (in bytes) is high (channel overloaded);
- $O_{BL}$ - means that the Occupancy of the channel (in bytes) is low (channel underloaded);
- $O_{PL}$+ means that the occupancy of the channel (in packets) is high (channel overloaded);
- $O_{PL}$- means that the Occupancy of the channel (in packets) is low (channel underloaded);
- ↑ means that the specified attribute will increase;
- ↓ means that the specified attribute will decrease;
- \+ means that the specified attribute is / will remain high /big;
- \- means that the specified attribute is / will remain low /small.

The use of the terms "high / big", "low / small" is related to the nature of the dimension measured, and also the use of "is / will remain" refers to the position where this signal may be found - when referring to the columns named "Current", it is "is", otherwise it is "will remain".

If $R_{IA} < R_{IA} - \delta_{HIA}$ :

| | $R_{PL} < H_{PL} - \delta_{HPL}$ | | | | | | | $R_{PL} > H_{PL} - \delta_{HPL}$ | | | | | | |
|---|---|---|---|---|---|---|---|---|---|---|---|---|---|---|
| | Current | | | Expected | | | | Current | | | Expected | | | |
| | $A_{IA}$ | $O_{BL}$ | $O_{PL}$ | $A_{IA}$ | $O_{BL}$ | $O_{PL}$ | Action | $A_{IA}$ | $O_{BL}$ | $O_{PL}$ | $A_{IA}$ | $O_{BL}$ | $O_{PL}$ | Action |
| $R_{BL} < H_{BL} - \delta_{HBL}$ | + | + | + | ↓ | ↓ | ↓ | | + | + | + | ↓ | ↓ | + | |
| | + | + | - | ↓ | ↓ | ↑ | | + | + | - | ↓ | ↓ | - | |
| | + | - | + | ↓ | ↑ | ↓ | EX0 | + | - | + | ↓ | ↑ | + | |
| | + | - | - | ↓ | ↑ | ↑ | | + | - | - | ↓ | ↑ | - | |
| | - | + | + | ↑ | ↓ | ↓ | | - | + | + | ↑ | ↓ | + | |
| | - | + | - | ↑ | ↓ | ↑ | | - | + | - | ↑ | ↓ | - | EX1 |
| | - | - | + | ↑ | ↑ | ↓ | | - | - | + | ↑ | ↑ | + | |
| | - | - | - | ↑ | ↑ | ↑ | | - | - | - | ↑ | ↑ | - | |
| $R_{BL} > H_{BL} - \delta_{HBL}$ | + | + | + | ↓ | + | ↓ | | + | + | + | ↓ | + | + | |
| | + | + | - | ↓ | + | ↑ | | + | + | - | ↓ | + | - | EX3 |
| | + | - | + | ↓ | - | ↓ | | + | - | + | ↓ | - | + | |
| | + | - | - | ↓ | - | ↑ | | + | - | - | ↓ | - | - | |
| | - | + | + | ↑ | + | ↓ | | - | + | + | ↑ | + | + | |
| | - | + | - | ↑ | + | ↑ | EX2 | - | + | - | ↑ | + | - | |
| | - | - | + | ↑ | - | ↓ | | - | - | + | ↑ | - | + | |
| | - | - | - | ↑ | - | ↑ | | - | - | - | ↑ | - | - | |

If $R_{IA} > H_{IA} - \delta_{HIA}$ :

| | $R_{PL} < H_{PL} - \delta_{HPL}$ | | | | | | | $R_{PL} > H_{PL} - \delta_{HPL}$ | | | | | | |
|---|---|---|---|---|---|---|---|---|---|---|---|---|---|---|
| | Current | | | Expected | | | | Current | | | Expected | | | |
| | $A_{IA}$ | $O_{BL}$ | $O_{PL}$ | $A_{IA}$ | $O_{BL}$ | $O_{PL}$ | Action | $A_{IA}$ | $O_{BL}$ | $O_{PL}$ | $A_{IA}$ | $O_{BL}$ | $O_{PL}$ | Action |
| $R_{BL} < H_{BL} - \delta_{HBL}$ | + | + | + | + | ↓ | ↓ | EX4 | + | + | + | + | ↓ | + | |
| | + | + | - | + | ↓ | ↑ | | + | + | - | + | ↓ | - | |
| | + | - | + | + | ↑ | ↓ | | + | - | + | + | ↑ | + | |
| | + | - | - | + | ↑ | ↑ | | + | - | - | + | ↑ | - | |
| | - | + | + | - | ↓ | ↓ | | - | + | + | - | ↓ | + | |
| | - | + | - | - | ↓ | ↑ | | - | + | - | - | ↓ | - | |
| | - | - | + | - | ↑ | ↓ | | - | - | + | - | ↑ | + | |
| | - | - | - | - | ↑ | ↑ | | - | - | - | - | ↑ | - | EX5 |
| $R_{BL} > H_{BL} - \delta_{HBL}$ | + | + | + | + | + | ↓ | | + | + | + | + | + | + | |
| | + | + | - | + | + | ↑ | | + | + | - | + | + | - | |
| | + | - | + | + | - | ↓ | | + | - | + | + | - | + | |
| | + | - | - | + | - | ↑ | | + | - | - | + | - | - | EX7 |
| | - | + | + | - | + | ↓ | | - | + | + | - | + | + | |
| | - | + | - | - | + | ↑ | | - | + | - | - | + | - | |
| | - | - | + | - | - | ↓ | | - | - | + | - | - | + | |
| | - | - | - | - | - | ↑ | EX6 | - | - | - | - | - | - | |

Actions are not defined in the scope of this invention, and as so, the full decision tables are not presented (cases where the measured Hurst parameter falls inside the given history interval), but we can present some conclusions on some of the table entries EX0 to Ex7, chosen randomly:

- EX0 - Analysis of current situation: slow packets (by slow/fast packets it means that packets arrive at a low rate, or packets arrive at a high rate), low byte load on the channel, with a high number of packets (meaning many slow small packets have been arriving); calculated values for the Hurst parameter on dimensions suggest that we can expect packets to arrive more closely in time, bigger packets, and fewer packets. So a small increase it is expected in the occupancy of buffers in network equipment, as well as no increase of the work load on the CPU (computer processing unit) of the network equipment.

- EX1: Analysis of current situation: fast packets, high byte load on the channel, with a small number of packets (meaning few fast big packets have been arriving); calculated values for the Hurst parameter on dimensions suggest that we can expect packets to arrive more separated in time, smaller packets, with no change in the number of packets. So a small decrease is expected in the occupancy of buffers in network equipment, as well as a decrease of the work load on the CPU of the network equipment.

- EX2: Analysis of current situation: fast packets, high byte load on the channel, with a small number of packets (meaning few fast big packets have been arriving); calculated values for the Hurst parameter on dimensions suggest that we can expect packets to arrive more separated in time, no change in the size of packets, with more packets arriving. So a big increase is expected in the occupancy of buffers in network equipment, as well as also an increase of the work load on the CPU of the network equipment.

- EX3: Analysis of current situation: slow packets, high byte load on the channel, with a small number of packets (meaning few slow big packets have been arriving); calculated values for the Hurst parameter on dimensions suggest that we can expect packets to arrive more close in time, with no change in the size and number of packets. So a small increase is expected in the occupancy of buffers in network equipment, as well as no change of the work load on the CPU of the network equipment.

- EX4: Analysis of current situation: slow packets, high byte load on the channel, with a big number of packets (meaning many slow big packets have been arriving); calculated values for the Hurst parameter on dimensions suggest that we can expect packets to arrive at the same rate, smaller and fewer packets. So a big decrease is expected in the occupancy of buffers in network equipment, as well as a decrease of the work load on the CPU of the network equipment.

- EX5: Analysis of current situation: fast packets, low byte load on the channel, with a small number of packets (meaning few fast small packets have been arriving); calculated values for the Hurst parameter on dimensions suggest that we can expect packets to arrive at the same rate, yet bigger packets, with no change in the number of packets. So a small increase is expected in the occupancy of buffers in network equipment, as well as no change of the work load on the CPU of the network equipment.

- EX6: Analysis of current situation: fast packets, low byte load on the channel, with a small number of packets (meaning few fast small packets have been arriving); calculated values for the Hurst parameter on dimensions suggest that we can expect packets to arrive at the same rate, still small packets, with an increase of the number of packets arriving. So a moderate increase is expected in the occupancy of buffers in network equipment, as well as an increase of the work load on the CPU of the network equipment.

- EX7: Analysis of current situation: flow packets, low byte load on the channel, with a small number of packets (meaning few slow small packets have been arriving); calculated values for the Hurst parameter on dimensions suggest that we can expect traffic characteristic not to change. Channel load and CPU load will maintain their tendency.
  Based on the estimation of the network behavior, actions can be defined in order to, for example, perform an early send of buffered packets, reshape the buffer space, or even drop some of the incoming packets (additional *criteria* may be needed here).

Based on the estimation of the network behavior, actions can be defined in order to, for example, perform an early send of buffered packets, reshape the buffer space, or even drop some of the incoming packets (additional criteria may be needed here).

We also present a proposal on what could be an architectural draft of this machine concept. Figure 8 shows a block diagram with a network equipment receiving input data "Input traffic", transmitting output data "output traffic". The block diagram includes also three mEBP-estimators "mEBP calc" which receive their data from a "packet feature extraction" module. This module is responsible for feeding the "mEBP calc" machines with accurate data retrieved from the data packets, which have previously been replicated by the Splitter module at the input data "Input traffic". A "LOGIC" module receives the output from the three "mEBP calc" machines and from the status of the network equipment, and sends a control command to the network equipment. Note that we don't make any assumption about the nature or format of the data packets (these can be electrical or optical).

## Claims

**1.** Monitoring method of processing of a data stream that is sequentially inputted at a high rate/flow in an element where said processing is executed, wherein:

- said data stream has at least one valuable self-similarity property that interacts with performance of said processing;
- storing and estimation means are used to provide a self-similarity degree after measuring values in a sampled data set from the inputted data stream;
- said self-similarity degree is defined as Hurst parameter that is estimated by mean of an Embedded Branching Process (EBP) with related crossing tree structure und crossing levels;

**characterized in that**
a modified Embedded Branching Process (mEBP) is used, wherein:

- said sampled data set is comprising a first previous stored aggregated sample of a plurality of incoming data and a second current sample of a single new incoming data;
- for estimating a new Hurst parameter, said crossing tree structure for the previous stored aggregated sample is actualized according to the new incoming data;
- said actualization of calculated crossing tree structure is provided by selecting a limited and adaptable number of crossing levels for measuring values, by using minimal storing means for the previous stored aggregated sample as well as by computing in real-time at least one mean value of the previous stored aggregated sample with a measured value of the current sample in order to minimize the estimation time of the new Hurst parameter.

**2.** The monitoring method according to claim 1,
wherein the new Hurst parameter is estimated with statistical means based on said mean value of the previous stored aggregated sample - or its variance - and the number of samples.

**3.** The monitoring method according to claim 1 or 2,
wherein the estimation of a new value of Hurst parameter is providing such that a trace of whole incoming data is avoided.

**4.** The monitoring method according to any of the preceding claims, wherein said estimation time of new Hurst parameter is under 10ms.

**5.** The monitoring method according to any of the preceding claims, wherein the element performs a data traffic control for said incoming data by a limited traffic capacity.

**6.** The monitoring method according to any of the preceding claims, wherein the element performs an acquisition of said incoming data.

**7.** The monitoring method according to any of the preceding claims, wherein the element performs an analysis of said incoming data.

**8.** The monitoring method according to any of the preceding claims, wherein the element performs a rendering of said incoming data.

**9.** Use of the monitoring method according to any of the preceding claims, wherein incoming data can be telecommunication data, medical data or images, financial data, fractal data or images, artificial intelligence data or knowledge engineering processes, pattern recognition data, weather data, geological data, geographical data, spatial data etc.

**10.** Network element with traffic estimation means according to the monitoring method in any of the preceding claims 1 to 8 comprising:

- a first Hurst parameter estimator (1) based on modified Embedded Branching Process (mEBP) at input side of network element in order to estimate the Hurst parameter of an incoming data stream (2);
- a data access controller (6) which is triggered by the first Hurst parameter estimator (1) in order to transmit or to drop data of the data stream according to the value of Hurst parameter and to the traffic capacity of transmission.

**11.** Network element according to claim 10, wherein transmitted data are forwarding in a memory buffer (7) depending on a priority class like for priority according to standard IEEE 802.1p.

**12.** Network element according to claim 10 or 11, wherein

- a packet classifier (3) distributes packets of data at output of first Hurst parameter estimator (1) according to different priority classes of data;
- a packet that is outgoing said packet classifier (3) is transmitted to one of parallel distributed memory buffers (7) over a second Hurst parameter estimator (4) based on modified Embedded Branching Process (mEBP) and, further on, over the data access controller (6) which can interrupt or drop the transmission.

**13.** Network element according to any of the preceding claim 10-12, wherein a quality of data traffic or processing is estimated in a Hurst parameter estimator (1, 3), in which at least one of following crossing levels can be used: source-destination address pairs with byte count; source-destination address pairs with packet count; packet size; packet size with byte count; packets inter-arrival time; channel byte load; channel packet load; protocols in packets.

FIG 1A

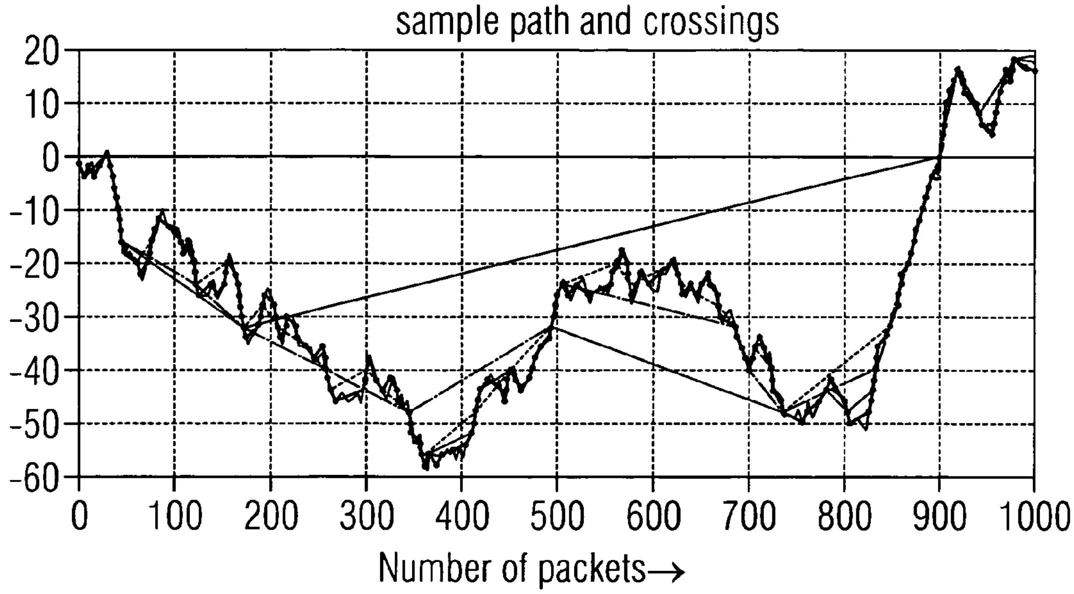
sample path and crossings
20
10
0
-10
-20
-30
-40
-50
-60
0
100
200
300
400
500
600
700
800
900
1000
Number of packets→

FIG 1B

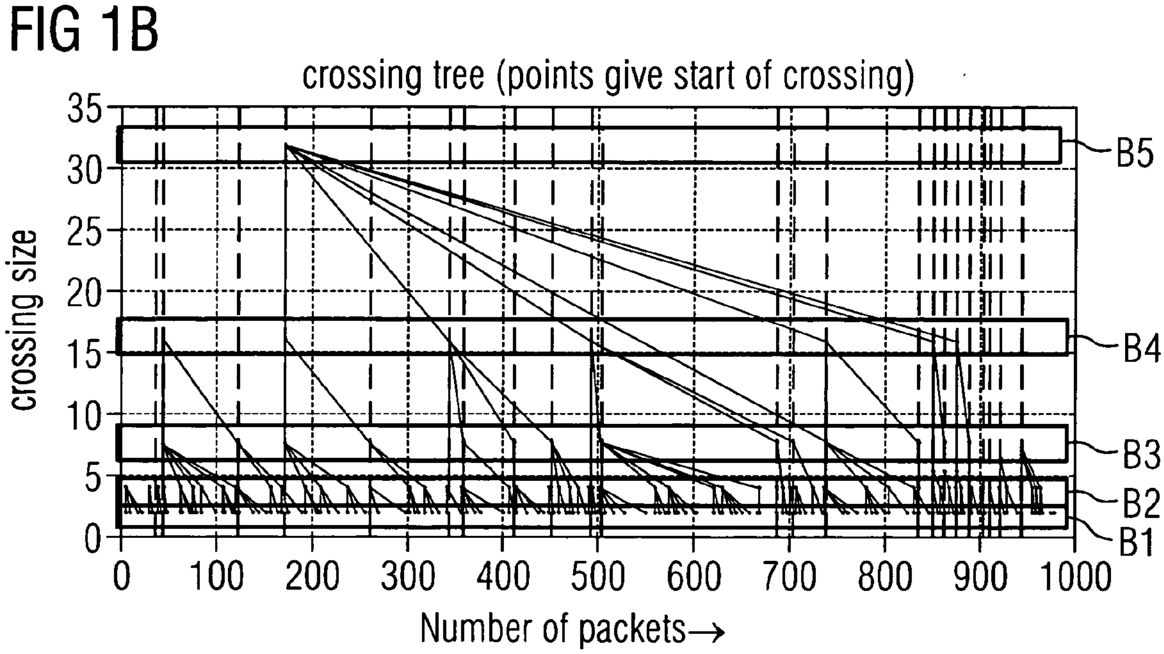
crossing tree (points give start of crossing)
35
30
25
20
15
10
5
0
crossing size
0
100
200
300
400
500
600
700
800
900
1000
Number of packets→
B5
B4
B3
B2
B1

FIG 2

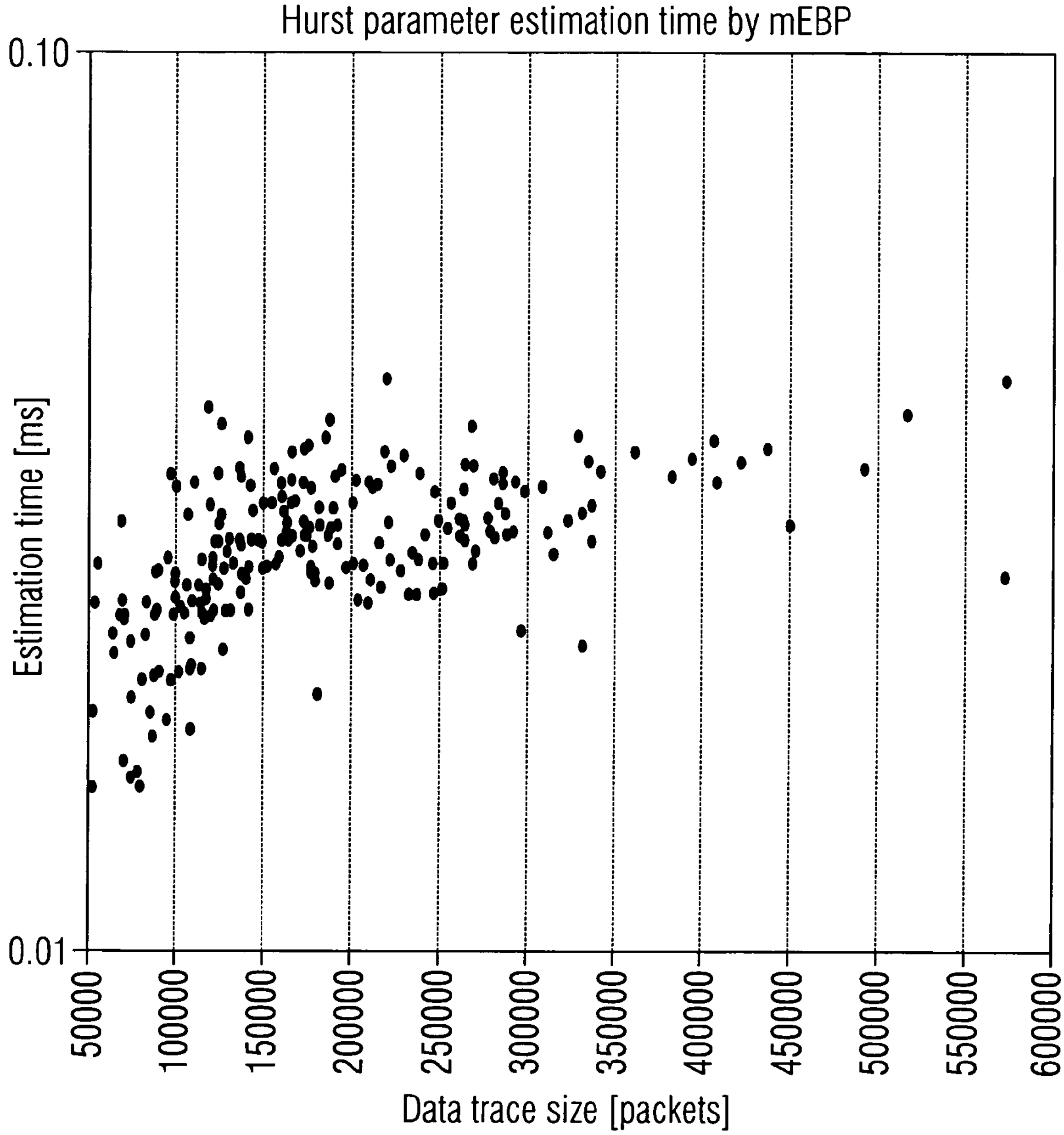
Hurst parameter estimation time by mEBP
0.10
0.01
Estimation time [ms]
50000
100000
150000
200000
250000
300000
350000
400000
450000
500000
550000
600000
Data trace size [packets]

FIG 3

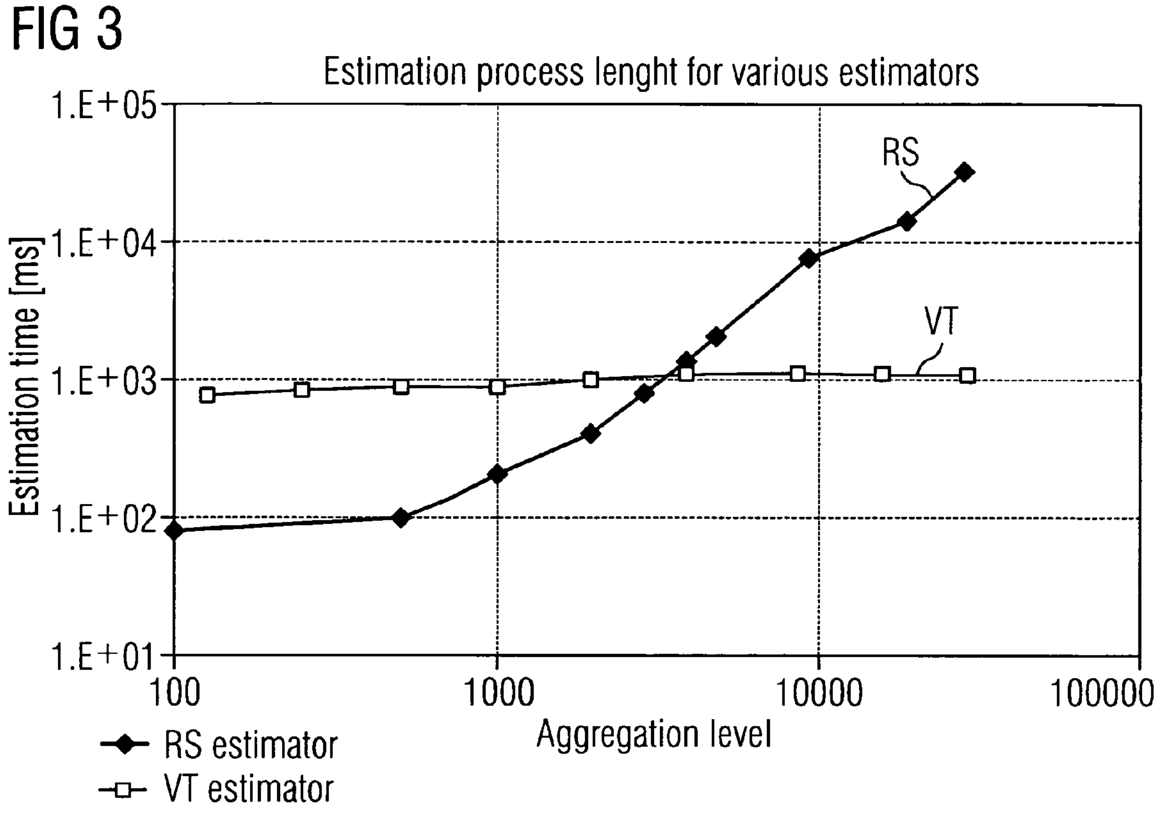
Estimation process lenght for various estimators
Estimation time [ms]
1.E+05
1.E+04
1.E+03
1.E+02
1.E+01
RS
VT
100
1000
10000
100000
Aggregation level
RS estimator
VT estimator

FIG 4

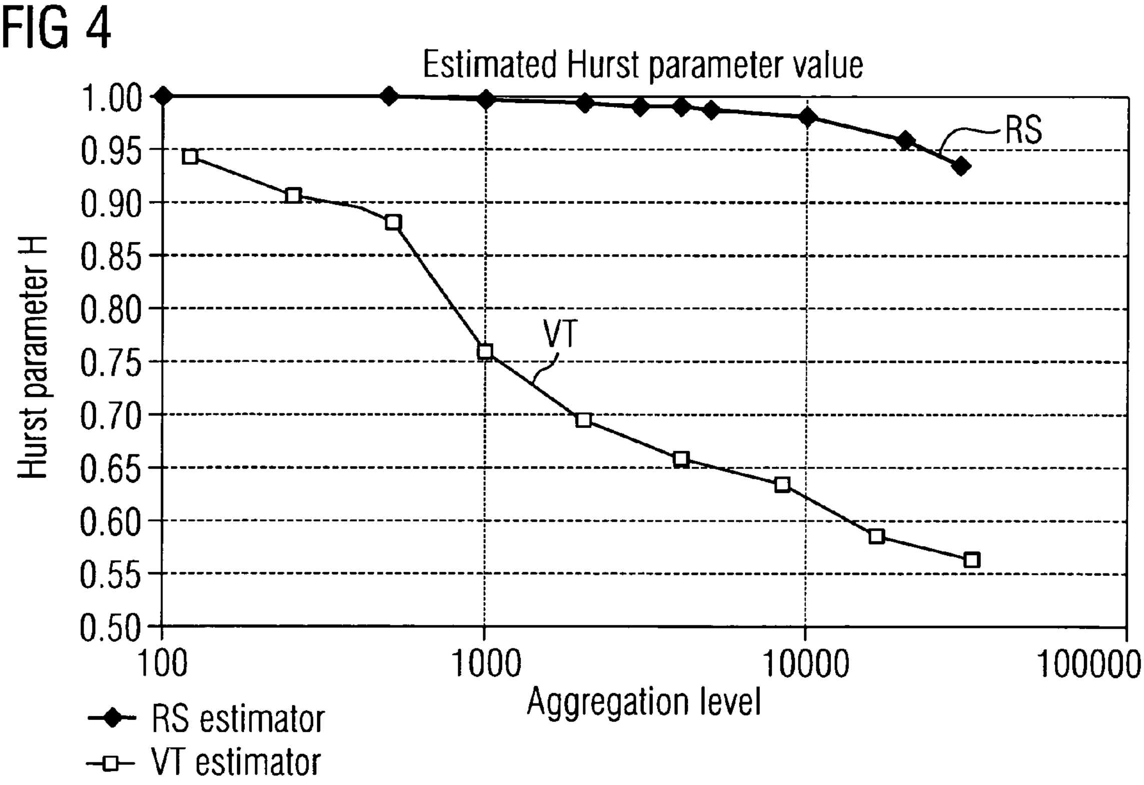
Estimated Hurst parameter value
Hurst parameter H
1.00
0.95
0.90
0.85
0.80
0.75
0.70
0.65
0.60
0.55
0.50
RS
VT
100
1000
10000
100000
Aggregation level
RS estimator
VT estimator

FIG 5

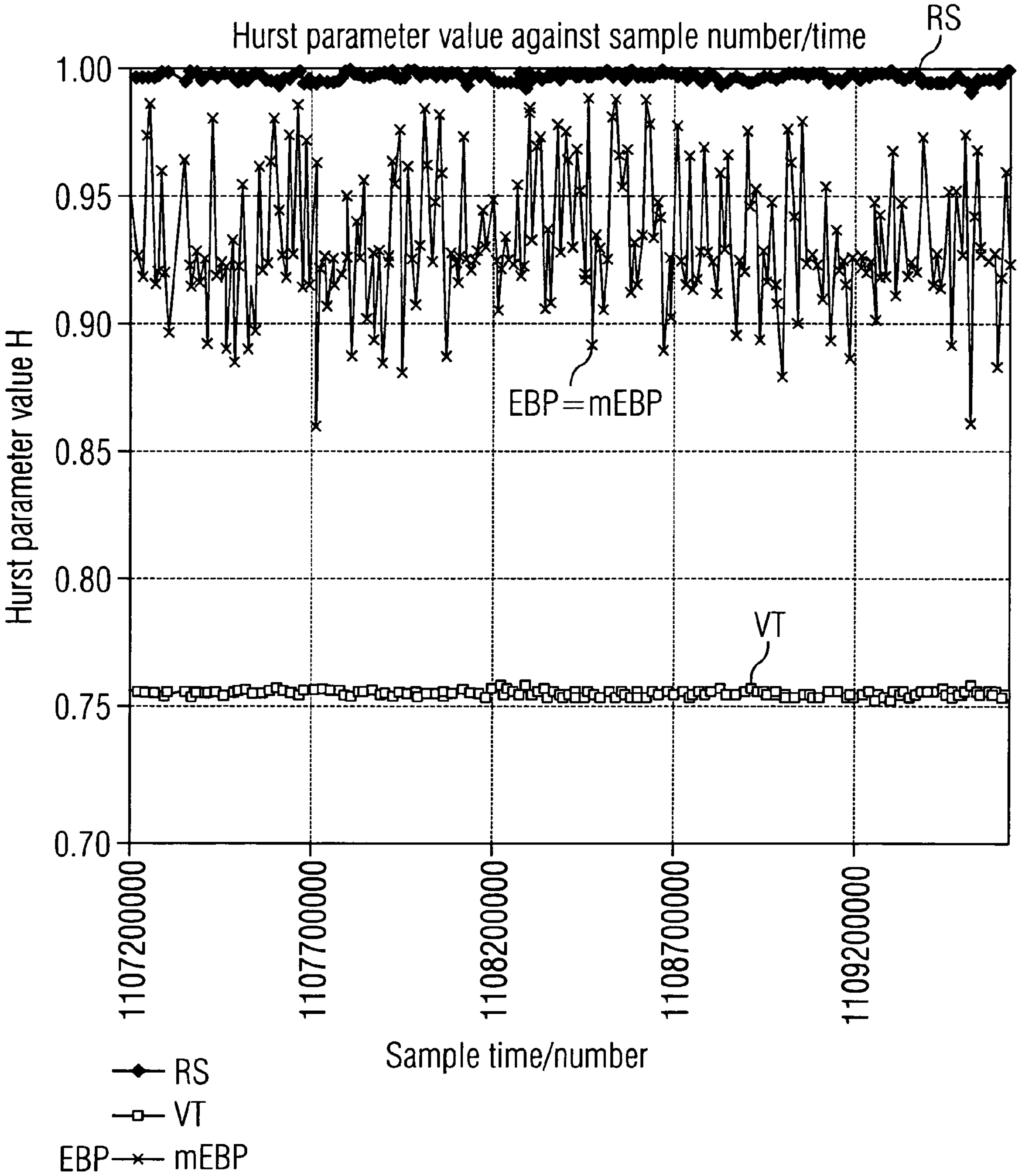
Hurst parameter value against sample number/time
RS
1.00
0.95
0.90
0.85
0.80
0.75
0.70
Hurst parameter value H
EBP=mEBP
VT
1107200000
1107700000
1108200000
1108700000
1109200000
Sample time/number
RS
VT
EBP mEBP

FIG 6

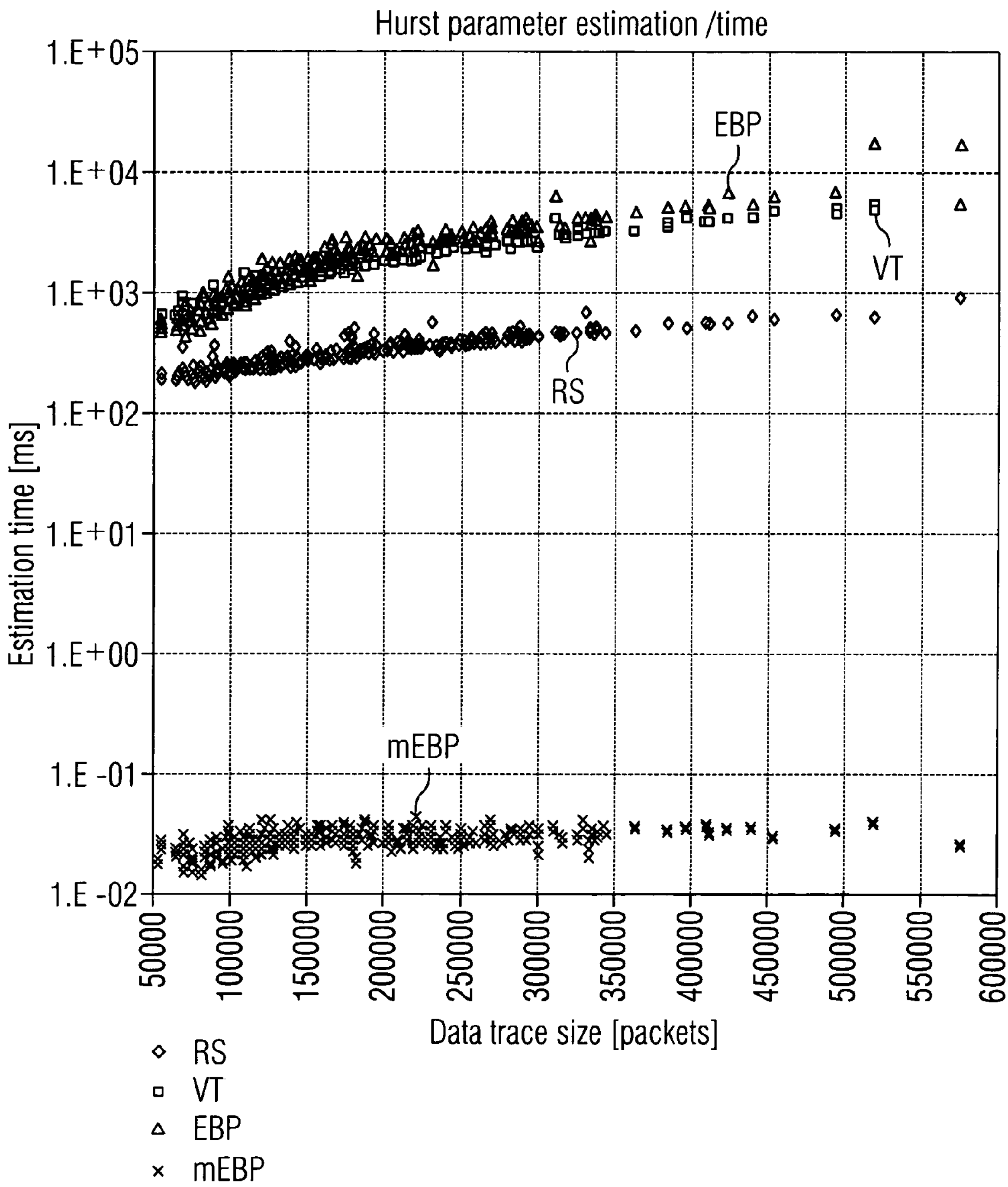
Hurst parameter estimation /time
Estimation time [ms]
1.E+05
1.E+04
1.E+03
1.E+02
1.E+01
1.E+00
1.E -01
1.E -02
EBP
VT
RS
mEBP
50000
100000
150000
200000
250000
300000
350000
400000
450000
500000
550000
600000
Data trace size [packets]
RS
VT
EBP
mEBP

FIG 7

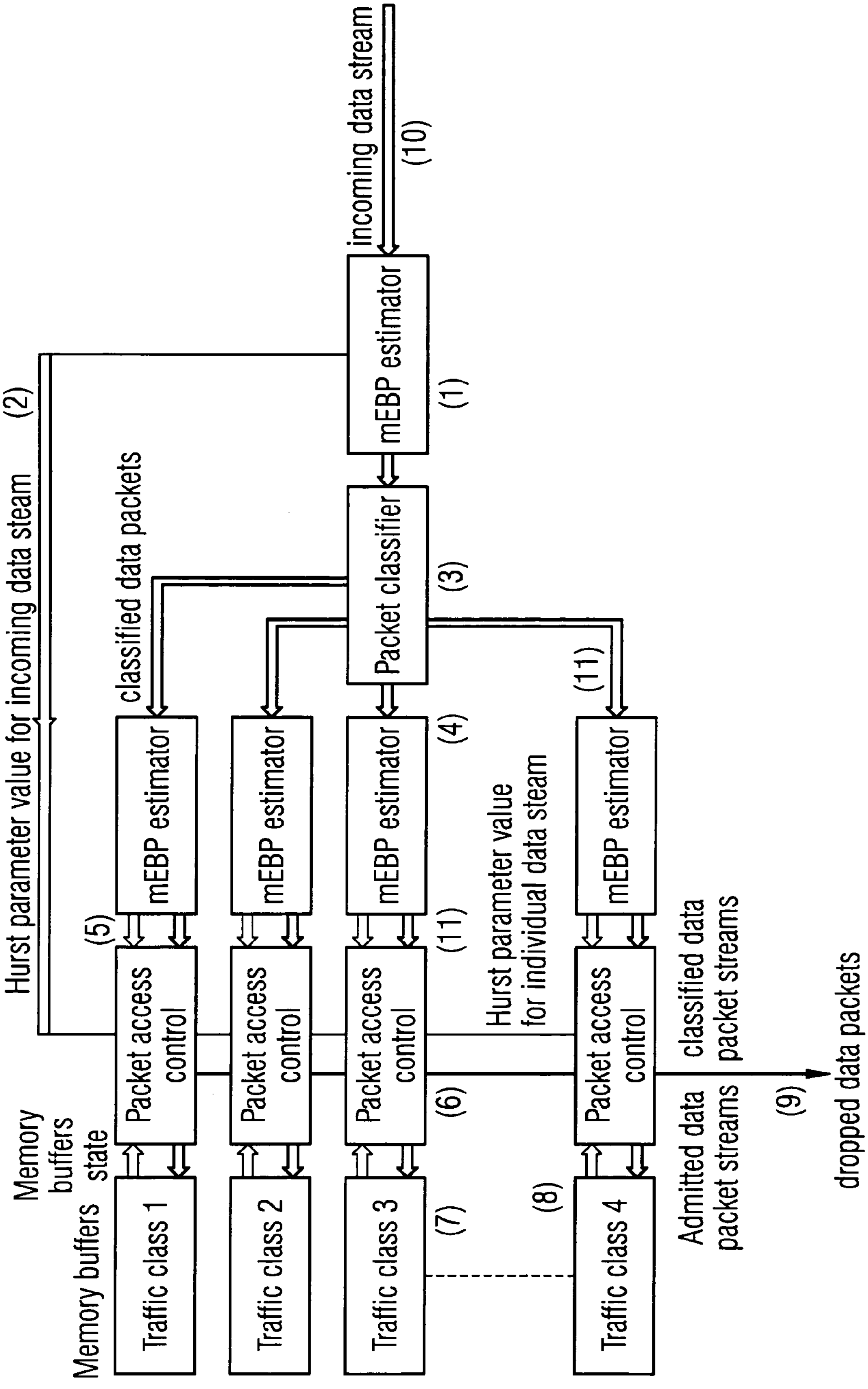
incoming data stream
(10)
mEBP estimator
(1)
Hurst parameter value for incoming data steam
(2)
classified data packets
Packet classifier
(3)
mEBP estimator
mEBP estimator
mEBP estimator
(4)
(11)
mEBP estimator
(5)
Packet access control
Packet access control
Packet access control
(11)
Hurst parameter value for individual data steam
Packet access control
classified data packet streams
Memory buffers state
Memory buffers
Traffic class 1
Traffic class 2
Traffic class 3
(7)
(6)
(8)
Traffic class 4
Admitted data packet streams
(9)
dropped data packets

FIG 8

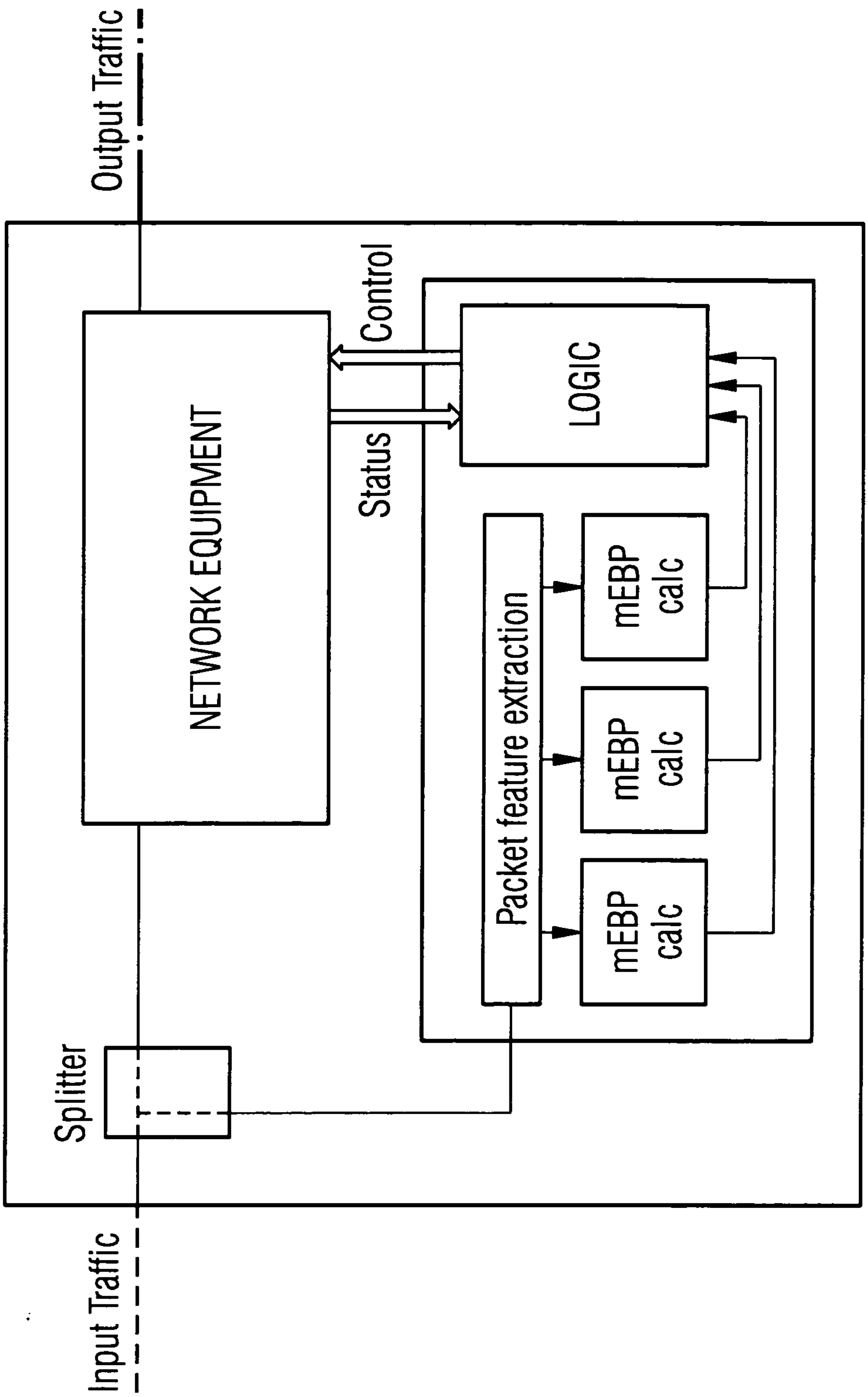
Output Traffic
Input Traffic
Splitter
NETWORK EQUIPMENT
Status
Control
LOGIC
Packet feature extraction
mEBP calc
mEBP calc
mEBP calc

European Patent Office

# EUROPEAN SEARCH REPORT

Application Number
EP 05 02 3580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | OWEN DAFYDD JONES, YUAN SHEN: "Estimating the Hurst Index of a Self-Similar Process via the Crossing Tree"<br>IEEE SIGNAL PROCESSING LETTERS, [Online] vol. 11, no. 4, April 2004 (2004-04), XP002355960<br>Retrieved from the Internet: URL:http://ieeexplore.ieee.org/iel5/97/28544/01275501.pdf?tp=&arnumber=1275501&isnumber=28544> [retrieved on 2005-11-24]<br>Chapters I and II<br>----- | 1-13 | H04L12/56<br>H04L12/26 |
| Y | ROUGHAN M ET AL: "ON-LINE ESTIMATION OF THE PARAMETERS OF LONG-RANGE DEPENDENCE"<br>IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY : IEEE, US,<br>vol. VOL. 6, 1998, pages 3716-3721, XP000805318<br>ISBN: 0-7803-4985-7<br>Chapter III<br>----- | 1-13 | TECHNICAL FIELDS SEARCHED (IPC)<br>H04L |
| A | US 6 608 815 B1 (HUANG JUN ET AL)<br>19 August 2003 (2003-08-19)<br>* column 3, line 51 - column 4, line 18 *<br>* column 10, lines 10-50; figures 1,2 *<br>----- | 5,10-13 | |
| A | US 2004/257999 A1 (MACISAAC GARY)<br>23 December 2004 (2004-12-23)<br>* paragraphs [0038], [0045], [0046] *<br>* paragraphs [0090] - [0097] *<br>* figures 3,7 *<br>-----<br>-/-- | 5,10 | |

The present search report has been drawn up for all claims

| Place of search | Date of completion of the search | Examiner |
|---|---|---|
| Munich | 25 November 2005 | Kreppel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

European Patent Office

# EUROPEAN SEARCH REPORT

Application Number
EP 05 02 3580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/40703 A (ERICSSON AUSTRALIA PTY. LTD; ROYAL MELBOURNE INSTITUTE OF TECHNOLOGY;) 12 August 1999 (1999-08-12) * page 6, line 29 - page 9, line 11; figure 1 * ----- | 1-4,6-9 | |
| A | HAGIWARA T ET AL: "High-speed calculation method of the hurst parameter based on real traffic" LOCAL COMPUTER NETWORKS, 2000. LCN 2000. PROCEEDINGS. 25TH ANNUAL IEEE CONFERENCE ON NOVEMBER 8-10, 2000, PISCATAWAY, NJ, USA,IEEE, 8 November 2000 (2000-11-08), pages 662-669, XP010527502 ISBN: 0-7695-0912-6 Chapters 1-4 ----- | 1-4,6-9 | |
| | | | TECHNICAL FIELDS SEARCHED (IPC) |

The present search report has been drawn up for all claims

| Place of search | Date of completion of the search | Examiner |
|---|---|---|
| Munich | 25 November 2005 | Kreppel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 05 02 3580

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2005

| Patent document cited in search report | | Publication date | Patent family member(s) | | | Publication date |
|---|---|---|---|---|---|---|
| US 6608815 | B1 | 19-08-2003 | CA | 2279652 | A1 | 05-02-2001 |
| US 2004257999 | A1 | 23-12-2004 | AU | 2002214897 | A1 | 10-06-2003 |
| | | | WO | 03044635 | A1 | 30-05-2003 |
| | | | CA | 2465127 | A1 | 30-05-2003 |
| WO 9940703 | A | 12-08-1999 | CN | 1296688 | A | 23-05-2001 |
| | | | EP | 1053618 | A1 | 22-11-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **M. ROUGHAN ; D. VEITCH ; P. ABRY.** Real-Time Estimation of the Parameters of Long-Range Dependence. *IEEE/ACM Transactions on networking,* August 2000, vol. 8 (4
- Owen Dafydd Jones, Yuan Shen, Estimating the Hurst Index of a Self-Similar Process via the Crossing Tree. *IEEE Signal Processing Letters,* April 2004, vol. 11